(19) Europäisches Patentamt
European Patent Office
Office européen des brevets

(11) **EP 4 386 332 A1**

(12) **EUROPEAN PATENT APPLICATION**

(43) Date of publication:
**19.06.2024 Bulletin 2024/25**

(21) Application number: **23464004.3**

(22) Date of filing: **13.03.2023**

(51) International Patent Classification (IPC):
***G01F 15/00*** (2006.01)    *G01F 25/00* (2022.01)
*B65D 88/70* (2006.01)

(52) Cooperative Patent Classification (CPC):
**G01F 15/003;** G01F 15/005; G01F 25/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 RO 202200818**

(71) Applicant: **National Institute for Research
Development and
Testing in Electrical Engineering - ICMET Craiova
200746 Craiova (RO)**

(72) Inventors:
• **Teisanu, Florin
200457 Craiova (RO)**
• **Chelan, Constantin
200618 Craiova (RO)**
• **Butoi, Marinela
200445 Craiova (RO)**
• **Patru, Ion
200438 Craiova (RO)**
• **Iordache, Ioan
240152 Ramnicu Valcea (RO)**
• **Nicola, Claudiu
200563 Craiova (RO)**
• **Nicola, Marcel
200222 Craiova (RO)**

(54) **PREDICTIVE METHOD AND SYSTEM FOR DETERMINING THE OPERATING CONDITION IN BIG-BLASTER AIR CANNONS AND MICRO-CANNONS**

(57)    The invention relates to a method and a system for diagnosing the operating condition of big-blaster air cannons and micro-cannons, used to release and ensure the flow of bulk/ pulverulent materials such as: cement, limestone, clinker, lime, coal, ores, cereals, etc. The method according to the invention can be applied to both new and existing products.

The diagnostic system according to the invention consists of a compressed air source (100), an application-specific electropneumatic module (200) for the preparation of the compressed air and for the control of the charge-hold-discharge cycle of the air cannon, a computer system (300) including a dynamic pressure sensor (301) installed in a threaded connection of the air cannon tank, an analogue-to-digital data acquisition board (303), an industrial PC computer (304) running software with a graphical user interface for the automatic acquisition and analysis of pressure signals, and a printer (305) for the automatic generation of Word-type reports.

Fig.4

**EP 4 386 332 A1**

## Description

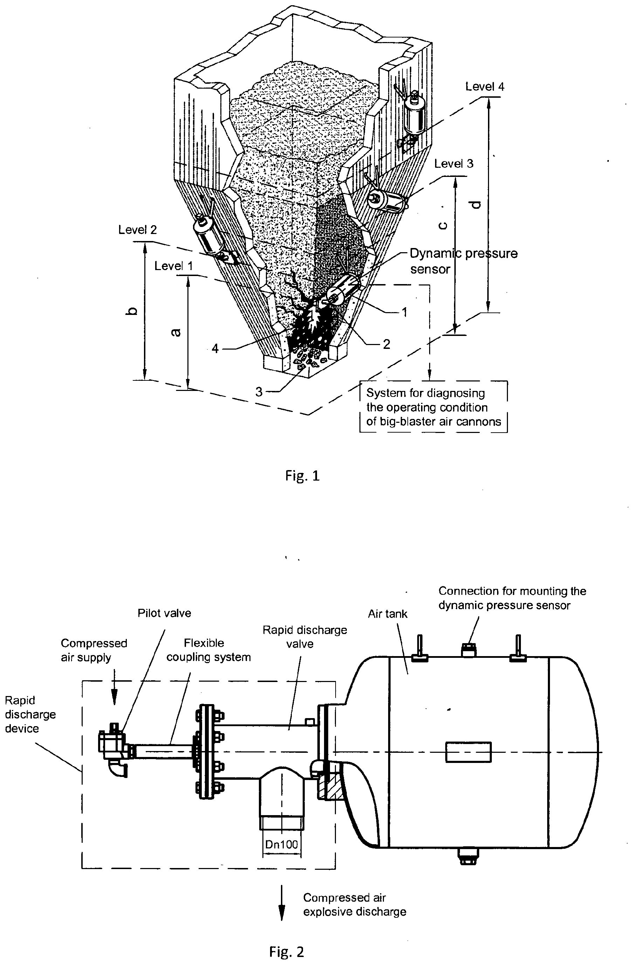

Big-Blaster type air cannon and micro-cannon installations are used to release and ensure the flow of bulk/ pulverulent materials such as: limestone, clay, pyrite, clinker, lime, metallurgical coke, coal, stored in bunkers and silos. They accumulate in a special tank, pneumatic potential energy, which is instantly converted into kinetic energy by external control, through a set of special valves. The shock wave generated manifests itself as a big explosion/expansion, hence the name "big-blaster". The number of air cannons or micro- cannons to be mounted and their position on a bunker or silo is specific to each application, fig.1.

The operating principle involves a slow (quasi-static) process of compressed air charging through a small cross-section pipe and a process of dynamic critical/sonic discharge through a discharge/blast opening of appreciable cross-section. Typically the installations operate at pressures of 4-10 bar, storage volumes up to 30 litres for air micro-cannons and 300 litres for air cannons.

The charging-discharging wave curve (graph) is specific to each type of air cannon and micro-cannon construction and is defined by shape, amplitude and duration. It can be considered as the "standard curve" for newly manufactured equipment and is a comparison element for the "state curve" specific to the operating condition of the equipment in operation at users.

For simplicity, below we can use the simplified term "air cannons" instead of "air cannons and micro-cannons".

**The technical solutions known in the patent literature are as follows:**

• Patent application US 2019/0343352 A1 "Air nozzles with brushes and scrapers".

It has an air nozzle consisting of a body, and the body has an end coupled to a pneumatic gun, and a second end has a channel which allows air to pass through and into which a brush is fitted.

In one example, at the second end, a scraper can be fitted instead of a brush. This allows the user to clean a surface using brushes, scrapers or directly air or even water.

This solution also has disadvantages such as:

- It can be used for rubbing low adhesion deposits on accessible surfaces with brushes/scrapers or direct air/water blowing.
- It uses only the kinetic energy of free flowing compressed air.
- It is not suitable for cleaning the interior surfaces of bunkers and silos where bulk/ pulverulent materials are stored.

• Patent application CH 709242A1 "Method and apparatus for cleaning the interiors of containers and equipment by means of explosion technology"

The cleaning device consists of a receiving space and at least one pressure vessel connected to the receiving space by at least one dosing valve. The control of introducing at least one gaseous component into the device is performed according to the principle of differential pressure.

The target residual pressure in the pressure vessel is determined based on the amount of gaseous component which will be introduced up to the maximum pressure, and the introduction of the gaseous component is stopped by the dosing valve when the target residual pressure is reached.

This solution also has disadvantages such as:

- It uses dangerous gases of the explosive category.
- It can only be used to clean by explosion the containers and enclosures that do not have openings and have a high-strength structure that cannot be damaged or destroyed by the blast.
- It cannot be applied to bunkers and silos loaded with bulk materials, since they are not enclosed constructions and the blast expansion occurs throughout the entire space and cannot be directed towards the bunker's extraction mouth.

• Patent application 2214651/1973 "Aérateur á déclanchement rapide ",Titulaire "Martin Engineering CO"

The invention relates to unclogging devices designed to allow the flow of bulk materials and in particular a quick release aerator device. According to figure 1 the aerator device (air cannon) consists of a tank (10) for compressed air, inside which there is a cylinder (28) and a piston (54) on which an O-ring (56) and an elastomer face seal (60) are placed.

The quick-release aerator is designed to achieve good results in unclogging bunkers and silos filled with bulk material. We can mention the following disadvantages:

- In order to determine the technical working order, the device must be removed from the silo and lowered to the ground. Then the device must be transported to a mechanical workshop where it is disassembled to carry out measurements and technical findings in parts such as the pneumatic cylinder, the piston, seals, etc., and these operations take a long time and involve significant costs.
- The presented solution does not provide a predictive method to determine the technical state of operation of the equipment at the application site and to eliminate the costly operations of dismantling from the site and disassembling into parts.

• Patent application RO No.132550/1988 "Device for rapid discharge of compressed air ".

The invention relates to a device for the rapid discharge of compressed air, accumulated in a tank, which is used to ensure the fluidity of the flow of bulk materials in bunkers or pipelines. The device consists of a rapid release valve (1), a rapid discharge valve (2) and a tank (4), where the rapid discharge valve (2) is provided with a piston (6) equipped with two seals (7) and (8) and a valve seat (10), etc. The purpose of the invention is to carry out a simple assembly-disassembly operations to replace the worn seals or the valve seat.

As a disadvantage, the invention does not provide a predictive method for determining the technical operating condition and the costly disassembly-assembly operations are to be carried out only in case of a malfunction to the equipment categorized predictively as non-functional.

## Brief description of the invention

The problem that the invention solves is the development of a new method for determining the technical operating condition of air cannons and micro-cannons (diagnosis) based on the evolution over time of the pressure curve during slow charging and dynamic discharge (sonic release), specific to each type of product. In order for the method to be applied, i.e. the air cannon to be charged with compressed air up to the nominal working pressure (commonly 10 bar), then to receive an external command to fire (sonic discharge) and the whole process to be recorded in real time, the invention also offers a technical solution for the construction of a specific system.

The system is modular in design, with a light weight and small overall size, so that it can be transported and placed in confined spaces by industrial users. The system is designed as a mechanical-penumatic-electric structure to produce compressed air necessary for the supply (charging), for the control of the discharge (firing) of the air cannon and includes a hardware structure with specific software for real time recording and analysis of the operating curve.

The analysis is performed by comparing the "state curve" of a product in service with a "standard curve" of a newly manufactured identical product and classifying it into two categories: fit-for-purpose products and defective products, which require removal from the installations and sending for repair to a specialized workshop.

Advantages of the invention:

- The method and the system can be applied both to newly manufactured products (at the manufacturing plant) and in operation to products already set up in installations at industrial users.
- It determines the good working or defective condition of air cannons in service, without having to dismantle them from installations and without disassembling their component parts, with significant time and cost reductions.
- It produces and distributes compressed air to the air cannon or micro-cannon and transmits the electrical signal initiating the data acquisition to the hardware structure.
- Its hardware and software structure allows the real-time acquisition of the "state curve" of a product, compares it with the "standard curve" and determines the good working or defective condition of the product, i.e.: fit for use or not fit for use (defective product).

## Detailed description of the invention

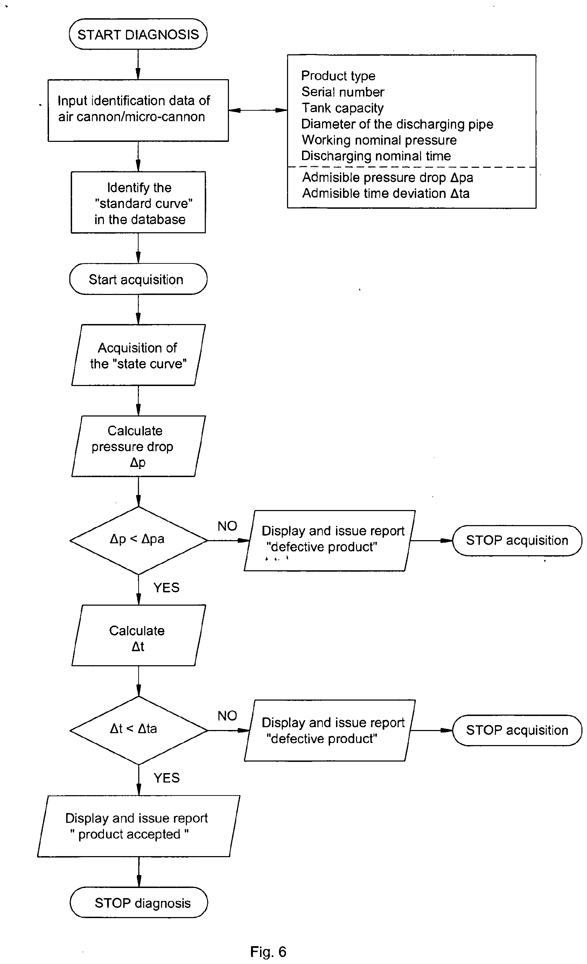

The following embodiment of the invention in relation to Fig. 1-6 represents:

Fig.1 Air cannons mounted on a silo loaded with bulk material and layout of the component parts of the diagnostic system.
Fig.2 Air cannon construction
Fig.3 Working sequences and pressure curve associated with the operation of air cannons and micro-cannons
Fig.4 "Standard curve" and "State curve"
Fig.5 Diagnostic system for the operation of big-blaster air cannons and micro-cannons
Fig.6 Diagnostic algorithm

The air cannons **AC** and air micro-cannons **AMC** are the main pieces of equipment of installations for unblocking / unclogging bunkers, silos and other types of constructions where bulk and/or pulverulent materials are temporarily stored.

A construction variant for this equipment **AC** is shown below in figure 2.

The equipment is of the mechanical-pneumatic type and consists mainly of a special container for the storage of pressurized air, a special 3/2-way valve for the rapid discharge of compressed air and a 3/2-way air pilot valve.

The design of the special rapid discharge valve may consist of a piston type as shown in Figure 2, or of a diaphragm type .

The accumulated potential energy, the released impact force, and the duration of the pneumatic impulse on discharge/firing allowed these devices to be categorized as air cannons or micro-cannons. To prove their efficiency, the devices are calculated and sized for a sonic/critical discharge of the air stored in the tank (v>314 m/s) according to Bernoulli's equation of compressible fluid dynamics. In this way, for technically usual pressures of 4-10 bar, the section of the discharge mouth was sized. Air cannons usually store compressed air volumes of 50, 75, 100, 150, 300 liters with a nominal diameter discharge mouth: Dn100 mm ; Dn125 mm ; Dn 150 mm.

Air micro-cannons are developed for applications requiring low impact forces at a higher firing frequency. They usually operate at pressures of 4-10 bar and store volumes of compressed air of: 12.5, 15, 25, 30 litres in the the pressurized container, and the discharge mouth is designed for nominal diameters: Dn25 ; Dn40 ; Dn50 ; Dn60mm.

In terms of functional parameters, cannons and micro-cannons are characterized by the volume of the container as a constant size and the working pressure as a variable size, usually in the range 4-10 bar.

The impact force generated on firing for each type of product depends on the duration of the sonic discharge. The shorter the duration of the discharge (usually 150-450 milliseconds), the more effective the impact force.

From a technical point of view, the pressure evolution in the cannon/micro-cannon tank can be continuously and accurately monitored using a dynamic pressure sensor, and the variation of the pressure in the tank can be approximated by the variation of the pressure at the discharge mouth.

For accuracy of measurement and graphical acquisition of the pressure curve, for the same type of cannon/micro-cannon design, whether newly manufactured or in service, the mounting position of the dynamic pressure sensor shall be identical, in the same threaded connection on the air tank, as shown in Figure 2.

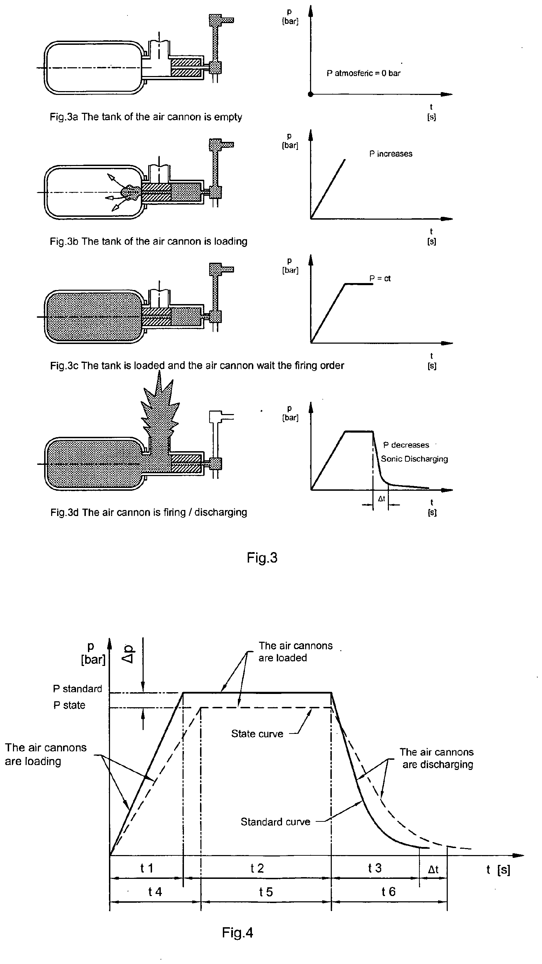

Taking these aspects into consideration we can make an association between the working phases of the pneumatic cannon/micro-cannon and the evolution in time of the pressure in the tank, as shown in in figure 3 a, b, c, d.

Figure 3a-The tank of the air cannon/micro-cannon is empty. The pressure in the tank is approximately the same as the atmospheric pressure.

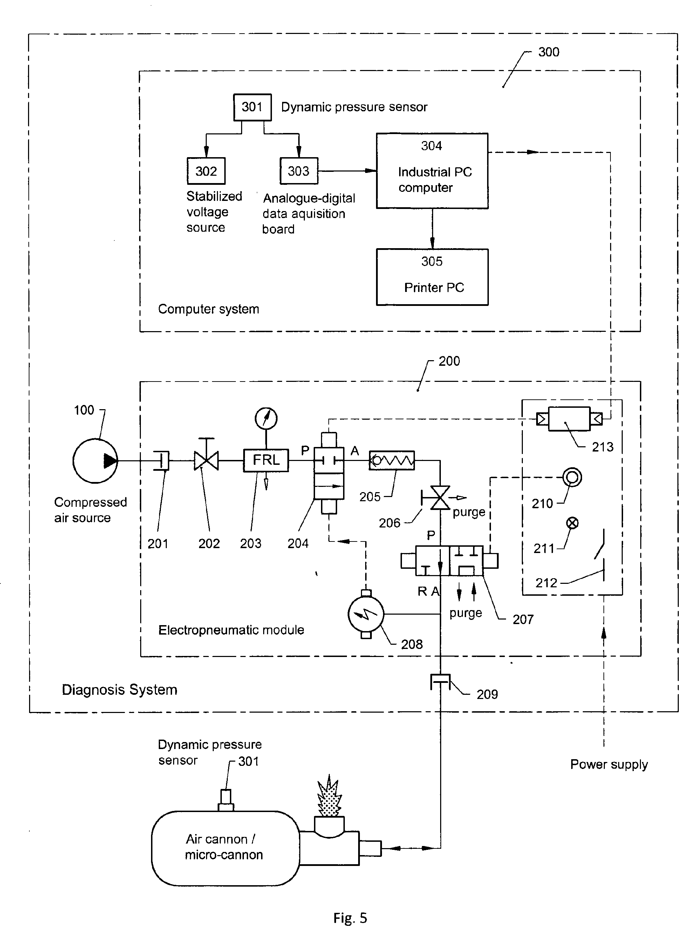

Figure 3b-Compressed air from a specific air cannon/micro-cannon installation (not shown) or delivered from an air cannon diagnostic system (fig.5) enters the pilot valve and rapid discharge valve, pushes the piston onto the valve seat and flows slowly through the central piston orifice into the tank. During this phase the pressure in the tank increases slowly.

Usually the duration of this phase - depending on the valve design - can be 1-4 minutes.

Fig.3c-Charged air cannon/micro-cannon

The compressed air has filled the tank and the pressure for a <u>functionally good product</u> is approximately the same as the pressure gauged in the installation at the inlet to the cannon/micro- cannon.

Basically during this working phase, for a functional product, the working pressure remains constant, the graph shows a plateau where p=ct.

The duration of this working phase depends on the requirements of the technological process in the user company. The external firing command can be transmitted rhythmically at time intervals, usually at 0.25-8 hours.

If the pressure curve does not maintain the plateau value (charged cannon) during the dwell time, then the product has design defects such as leakage in the moving parts and closing elements (connections, plugs, joints) . Due to the technological conditions in operation, these defects frequently occur in elastomer seals in the pilot valve, seals between the piston and the discharge valve cylinder, seals between the piston and the valve seat, plate type seals due to insufficient tightening of the flanges by screws, leakage of compressed air from threaded connections, cracks and deformations in the component parts, etc.

Compressed air is an extremely expensive form of energy. That's why leaks must be remedied immediately. For example, at an operating pressure of 10 bar, leakage through an orifice of only 1 mm$^2$ produces a drop in the flow of 120 Nl/min. This drop represents the flow delivered by an electric compressor with an electric power of P=1.1 kW, whose energy consumption W=3.95 kWh, i.e. approx. 2Euro per hour of operation.

Fig.3d-Air cannon/micro- cannon firing/discharging

When an electric command is transmitted to a solenoid valve in the installation, a small quantity of compressed air is purged, which produces a pneumatic imbalance in the cylinder of the actuating valve, the piston retracts and the entire quantity of compressed air in the tank is instantly released through the discharge opening. In a functional product, the air flow from the tank occurs at sonic speeds, for air v>314 m/s. The higher the velocity, the shorter the discharge time, the higher the impact force and the more efficient in the unblocking of bulk materials. Usually for fit-for-purpose products, the duration of the firing depends on the type and design and functional parameters of the equipment and is somewhere between 150-450 ms. If the duration of the firing increases significantly or the compressed air simply freely through the discharge opening, the equipment is defective.

Among the possible design faults there may be blockage of the piston on the valve seat, blockage or slowing down of the piston retraction in the discharge valve cylinder, incorrect operation of the pilot valve, etc.

In the cannon firing sequence, the pressure drop curve is abrupt, i.e. in a very short period of time $\Delta t$, the pressure drops from the value of the working pressure with which the tank is loaded to almost the value of the atmospheric pressure.

In the case of newly manufactured products that do not show any defects (fit for purpose), the standard curve that characterizes a charge hold discharge cycle is obtained by testing them on the stand in the open air, i.e. the sonic discharge occurs in the environment at atmospheric pressure.

In the case of non-defective air cannons in operation on a company's technological flows, the "state curve" is at the bottom, near the "standard curve". These differences are due to the sonic firing/discharge of the cannons in operation inside a pressurized enclosure due to the bulk materials or air and dust suspension which resist the impact force of the cannon, i.e. slow down the discharge (fig.4).

Thus the curves are not identical and for this reason differences, i.e. deviations, are accepted for the same type of equipment, figure 4.

For the air cannon/micro-cannon **charging phase,** we define the pressure deviation $\Delta p$, as the difference between the pressure corresponding to the standard curve and the pressure corresponding to the state curve (fig.4).

$$\Delta p = p_{standard} - p_{state} \geq 0 \ [bar] \qquad (1)$$

In the "charged cannon" working phase,. the usual hold time is 0.25-8 hours, and for the products in service with defects there are pressure drops, so that always $p_{standard} \geq p_{state}$, i.e. $\Delta p \geq 0$. Compressed air losses $\Delta p$ are costly and for this reason, in installations with many air cannons usually $\Delta p \leq 0,5$ bar is allowed, which is measured in a set time interval for technological and cost reasons.

For the **sonic discharge phase,** we define the time deviation $\Delta t$ as the percentage ratio between the sonic discharge times corresponding to the state curve and the standard curve (fig.4):

$$\Delta t = ( t_{state} - t_{standard} ) / t_{standard} \times 100 \ [\%] \qquad (2)$$

This positive deviation value ( $t_{state} \geq t_{standard}$ ) must be compared with a admissible deviation value "$\Delta t_a$" which is set for technological and cost considerations. For example, the permissible deviation value depending on the application can be accepted at values of 15-25% compared to the discharge/firing time of the standard equipment.

For air cannons in service with significant defects, the state curve is well below the standard curve, below the acceptable state curve.

If the time deviation on the cannon firing exceeds the admissible value $\Delta t > \Delta t_a$, this is the area of "$a_d$" fault deviation, and the product is not functional, it must be removed from the installation and sent for repair. In fact, when the duration of the discharge is extended, there is no sonic/critical discharge and instead we are approaching free flow, and the impact force is considerably reduced.

In the situation where we do not have a new fit-for-purpose product, the product in service that has no faults and has the best charge-hold-discharge curve can be chosen as the standard product.

**The main technical problem that the invention solves** is to provide a dedicated, accurate and easy-to-apply system and method to diagnose in real time, the design and functional condition of air cannons and micro-cannons, whether they are newly manufactured equipment or equipment in service. The proposed solution ensures the production and preparation of compressed air, charging and firing (sonic discharge) control, as well as the acquisition and analysis of the operating curve of an equipment, the "state curve", with the standard operating curve of new and fit-for-purpose equipment, the "standard curve". Information from the equipment under test is collected in real time by a dynamic pressure sensor placed on the air cannon/micro-cannon under test and processed in an industrial PC running dedicated software.

The dedicated software is developed in a programming environment such as the LabVIEW graphical programming environment.

The diagnostic system according to the invention, in order to solve the presented technical problem, presents an architecture, schematically represented in figure 5, consisting of:

- The standard compressed air source **100** is compact and light, making it easy to transport and use in hard-to-reach places. It consists of an electric compressor for the production of compressed air with a low flow rate and a minimum nominal pressure of 10 bar, a container for the storage of compressed air and components for operation, control and automatic protection. This source is connected to the pneumatic coupling **201** by a flexible pressure line, such as a compressed air hose.
- The electro-pneumatic module **200** is a customized design, small in size to be easily transported to hard-to-reach places, designed and functional for the preparation of compressed air and to the operation and control of the charging and firing of air cannons. It consists of a pneumatic coupling **201** at the inlet, a valve **202** of the closed-open type, a compressed air preparation unit FRL **203** consisting of a fine filter with micronic porosity provided with a drain valve, a pressure reducer which allows the value of the inlet pressure from the source **100** to be adjusted to lower values of the working pressure (5, 7, 8, 10 bar), and these values can be read on the existing pressure gauge, a lubricator which generates oil micro-fog in the compressed air flow. The 2/2 NC solenoid valve **204** (2 ways P and A, and 2 positions/NC-normally closed or NO-normally open) is connected to the output of the FRL group **203** by means of suitable pneumatic fittings. To switch between the operating conditions, the solenoid valve **204** receives an electrical command from a contact maker **213** whose contacts close on the digital command "start acquisition" sent by the industrial PC **304.**

This "start acquisition" command sent by the industrial PC **304** coincides with the moment when compressed air enters into the air cannon and triggers the automatic data acquisition process.

When the contact maker **213** is electrically actuated, the solenoid valve **204** opens, the compressed air flows through the one-way valve **205,** finds the valve **206** open and reaches the solenoid valve **207** type 3/2 NO (3 ways A, P, R and 2 positions NO-normally open and NC-normally closed). The valve **206** has two ways and three positions (closed, open, purge ) and is manually operated.

At the outlet of the electropneumatic module **200** there is a pneumatic coupling **209** that allows the compressed air to be supplied to the equipment under test and diagnosis, or to the air cannon/micro-cannon, through a flexible tube. The solenoid valve **207** is electrically controlled by manually actuating the PUSH button **210,** changing its operating condition from NO to NC, unbalance in the pneumatic circuit and triggering the firing of the air cannon/micro-cannon. Basically during this phase of the air cannon firing, the acquisition system continuously records and measures the time duration of the sonic discharge phenomenon to determine the time deviation $\Delta t$. After the electrical command has been given and the air cannon has been fired (discharged), the circuit is completely depressurized by moving valve **206** to the purge position.

At outlet A of solenoid valve **207** there is a pressure gauge **208** with electrical contacts on the pneumatic line, to measure the pressure and send an electrical signal. When the working pressure initially set on the contacts of the pressure gauge **208** is reached, it sends an electrical signal to the contact maker **213,** which in turn actuates the solenoid valve **204** which switches from the NO (normally open) state to the NC (normally closed) state and blocks the flow of compressed air from the source **100** to the air cannon to be tested and diagnosed.

Similarly, the one-way valve **205** does not allow compressed air to flow in the opposite direction, i.e. from the air cannon to the compressed air source **100**. In fact, by the NC position of the solenoid valve **204** and by the one-way valve **206,** we have isolated the air cannon at the working pressure, and the possible loss of compressed air and implicit pressure drop are only due to the leakage defects of the air cannon.

At this stage, we are basically in the charged cannon phase, where the acquisition system continuously records and measures the pressure value to determine the pressure drop $\Delta p$.

- The computer system **300** performs the real-time acquisition of the pressure signal during the charge-hold-discharge cycle of the air cannon/micro-cannon, its analysis and assessment of the product as fit for use or defective.

According to Figure 5 the computer system **300** has an architecture consisting of:
A dynamic pressure sensor **301,** powered from a stabilized electrical voltage source **302** and located in a threaded connection of the tank of the air cannon to be tested and diagnosed. The analogue signal transmitted by the sensor **301** reaches the analogue-digital data acquisition board **303**. The digital signal then enters the industrial PC **304,** on which we have installed a graphical user interface application for data input and analysis. The application consists of a series of modules for automatic pressure signal acquisition and recording, signal analysis, calculation-classification-writing-reading from MYSQL database, automatic generation of Word reports.

The industrial PC **304** communicates with a printer **305** to automatically generate printed reports.

The method and the system perform the diagnosis of the working condition of big-blaster air cannons and micro-cannons according to the following algorithm:

> Step 1 Start diagnosis
> Step 2 Input identification data of air cannon/micro-cannon
> Step 3 Identify the "standard curve" in the database
> Step 4 Start acquisition
> Step 5 Acquisition of the "state curve"
> Step 6 Calculate pressure drop $\Delta p$
> Step 7 If $\Delta p \le \Delta p_a$, then go to step 8
> If $\Delta p > \Delta p_a$, then go to step 11
> Step 8 Calculate the time deviation $\Delta t$
> Step 9 If $\Delta t \le \Delta t_a$, then go to step 10
> If $\Delta t > \Delta t_a$, then go to step 11
> Step 10 Display and issue "product accepted" report
> Step 11 Display and issue "defective product" report
> Step 12 Stop acquisition
> Step 13 Stop diagnosis

A product in service is a fit-for-purpose "accepted product" if the pressure drop $\Delta p \le \Delta p_a$ and the time deviation $\Delta t \le \Delta t_a$.

The standard product is the new, functional product, which has the same design and functional characteristics as the product to be tested and diagnosed, the distinction for identification purposess is made by the marking of the manufacturing series.

When acquiring the operating curve for a standard product - for which we do not have another product for comparison and analysis, the working algorithm goes through the following steps: 1, 2, 4, 5, 10, 12 and 13.

**Claims**

1. A system for diagnosing the operating condition of big-blaster air cannons and micro-cannons, **characterized in that,** for the purposes of compressed air production, preparation, charging and providing control and firing (discharge), as well as real-time acquisition and analysis of the operating curve, it consists of: a small and easily transportable compressed air source **(100)**; an electropneumatic module **(200)** of a special type, in which the pressure reducer (R) of the FRL group **(203)** ensures a set value of the working pressure downstream of the pneumatic circuit, which is less than or equal to the nominal pressure value; the solenoid valve **(204),** which is in the normally closed position NI, and the one-way valve **(205),** which keeps the downstream pneumatic circuit, including the air cannon isolated from the compressed air source **(100),** and the valve **(206),** which is operated to the bleed position, after firing the air cannon, to completely depressurize the pneumatic circuit; a dynamic pressure sensor **(301),** which is mounted in a threaded connection of the cannon/micro-cannon tank, being powered by a stabilized electrical voltage source **(302);** the sensor **(301)** sends an analog signal to an analog-to-digital data acquisition board **(303);** an industrial PC computer **(304),** which runs dedicated graphical acquisition and analysis software and a PC printer **(305).**

2. A system for diagnosing the operating condition of air cannons and micro-cannons, according to claim 1, **characterized in that,** when the real-time acquisition of the operating curve is initiated, the industrial PC **(304)** transmits a digital "start acquisition" signal to an electric-digital contact maker **(213)** located in the electropneumatic module **(200),** which electrically actuates the opening of the solenoid valve **(204)** to allow the air from the compressed air source **(100)** to flow into the pneumatic circuit and to charge the air cannon/micro-cannon until the working pressure is reached, when the pressure gauge **(208)** with electrical contacts sends the signal to close the solenoid valve **(204),** the downstream circuit no longer receives compressed air from the source **(100),** the circuit is isolated and for a certain period of time the dedicated software graphically records the pressure level, and after firing the air cannon and reaching the discharge curve, the industrial PC **(304)** sends a digital "stop acquisition" signal to the contact maker **(213).**

3. A system for diagnosing the operating condition of air cannons and micro-cannons, according to claim 1, **characterized in that** the industrial PC **(304)** runs a calculation and analysis program, whereby the values read from the "standard curve" graph and the "state curve" graph are used to calculate the pressure drop $\Delta p$ based on the relationship (1) of comparing it with the allowable pressure drop $\Delta p_a$ and automatically categorizing the product as fit-for-purpose or a defective, and for the fit-for-purpose product, the time deviation $\Delta t$ is calculated based on the relationship (2) of comparing it with the allowable time deviation $\Delta t_a$ and automatically categorizing the product as fit-for-purpose or a defective.

4.  A method for diagnosing the operating condition of big-blaster air cannons and micro-cannons, **characterized in that,** in the first step, the diagnosis process is initiated, in the second step, the identification data of the air cannon to be tested and diagnosed are entered, in the third step the "standard curve" is identified in the database, in the fourth step the real-time acquisition process is initiated, in the fifth step the "state curve" is acquired, in the sixth step the pressure drop $\Delta p$ is calculated, in the seventh step the pressure drop $\Delta p$ is compared with the allowable pressure drop $\Delta p_a$, in the eighth step the time deviation $\Delta t$ is calculated, in the ninth step the time deviation $\Delta t$ is compared with the allowable time deviation $\Delta t_a$, in the tenth step, the "accepted product" report is displayed and issued, in the eleventh step, the "defective product" report is displayed and issued, in the twelfth step, the acquisition cycle is stopped, and in the thirteenth step, the diagnosis cycle is stopped

Fig. 1

Fig. 2

Fig.3a The tank of the air cannon is empty

P atmosferic = 0 bar

Fig.3b The tank of the air cannon is loading

P increases

Fig.3c The tank is loaded and the air cannon wait the firing order

P = ct

Fig.3d The air cannon is firing / discharging

P decreases

Sonic Discharging

$\Delta t$

Fig.3

p [bar]

$\Delta p$

The air cannons are loaded

P standard

P state

State curve

The air cannons are loading

The air cannons are discharging

Standard curve

t1   t2   t3   $\Delta t$   t [s]

t4   t5   t6

Fig.4

300

| 301 Dynamic pressure sensor |

302
Stabilized
voltage
source

303
Analogue-digital
data aquisition
board

304
Industrial PC
computer

305
Printer PC

Computer system

200

100
Compressed
air source

FRL

P   A

205

206 — purge

P

R A   purge — 207

208

209

213

210

211

212

Electropneumatic module

Diagnosis System

Dynamic pressure
sensor — 301

Air cannon /
micro-cannon

Power supply

Fig. 5

START DIAGNOSIS

Input identification data of
air cannon/micro-cannon

Product type
Serial number
Tank capacity
Diameter of the discharging pipe
Working nominal pressure
Discharging nominal time
- - - - - - - - - - - - - - - - - - - -
Admisible pressure drop Δpa
Admisible time deviation Δta

Identify the
"standard curve"
in the database

Start acquisition

Acquisition of
the "state curve"

Calculate
pressure drop
Δp

Δp < Δpa —— NO —— Display and issue report
"defective product" —— STOP acquisition

YES

Calculate
Δt

Δt < Δta —— NO —— Display and issue report
"defective product" —— STOP acquisition

YES

Display and issue report
" product accepted "

STOP diagnosis

Fig. 6

Europäisches
Patentamt

European
Patent Office

Office européen
des brevets

# EUROPEAN SEARCH REPORT

Application Number

EP 23 46 4004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TEISANU FLORIN ET AL: "Predictive Method for Determining the Operating Condition of Big-Blaster Air Cannons Using Automatic Classification of Critical Discharge of Compressed Air", 2022 INTERNATIONAL CONFERENCE AND EXPOSITION ON ELECTRICAL AND POWER ENGINEERING (EPE), IEEE, 20 October 2022 (2022-10-20), pages 415-421, XP034234318, DOI: 10.1109/EPE56121.2022.9959832 [retrieved on 2022-11-25] | 4 | INV. G01F15/00 ADD. G01F25/00 B65D88/70 |
| Y | * page 417; figure 3 * * page 418; figure 6 * ----- | 1-3 | |
| Y | CN 114 001 940 A (SHOUGANG JINGTANG UNITED IRON & STEEL CO LTD) 1 February 2022 (2022-02-01) * claim 10; figure 1 * ----- | 1-3 | |
| Y | CN 102 928 180 A (TIANJIN ZHONGHUAN ELECTRONIC COMP CO LTD) 13 February 2013 (2013-02-13) * figure 3 * ----- | 1-3 | TECHNICAL FIELDS SEARCHED (IPC) |
| Y | EP 2 085 622 A1 (CATERPILLAR MOTOREN GMBH & CO [DE]) 5 August 2009 (2009-08-05) * figure 1 * ----- | 1-3 | B65D G01F G01M F15B |
| Y | CN 109 606 964 A (HERMAN NANJING TECHNICAL & ENG PTE LTD) 12 April 2019 (2019-04-12) * claim 1 * ----- | 1-3 | |
| A | EP 0 942 883 B1 (AGRICHEMA MATERIALFLUSSTECHNIK [DE]) 21 May 2003 (2003-05-21) * figure 7 * ----- | 1-4 | |

The present search report has been drawn up for all claims

| Place of search | Date of completion of the search | Examiner |
|---|---|---|
| The Hague | 16 August 2023 | Rambaud, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 46 4004

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2023

| Patent document cited in search report | | Publication date | Patent family member(s) | | Publication date |
|---|---|---|---|---|---|
| CN 114001940 | A | 01-02-2022 | NONE | | |
| CN 102928180 | A | 13-02-2013 | NONE | | |
| EP 2085622 | A1 | 05-08-2009 | AT | 477421 T | 15-08-2010 |
| | | | EP | 2085622 A1 | 05-08-2009 |
| CN 109606964 | A | 12-04-2019 | NONE | | |
| EP 0942883 | B1 | 21-05-2003 | AT | 240888 T | 15-06-2003 |
| | | | DE | 19743789 A1 | 08-04-1999 |
| | | | DK | 0942883 T3 | 15-09-2003 |
| | | | EP | 0942883 A1 | 22-09-1999 |
| | | | ES | 2196612 T3 | 16-12-2003 |
| | | | PT | 942883 E | 30-09-2003 |
| | | | WO | 9918012 A1 | 15-04-1999 |

For more details about this annex : see Official Journal of the European Patent Office, No. 12/82